# EUROPEAN PATENT SPECIFICATION

(11) **EP 1 127 914 B1**
(45) Date of publication and mention of the grant of the patent: **18.02.2009**
(21) Application number: 01103390.9
(22) Date of filing: 14.02.2001
(51) Int. Cl.: C08J 9/12, B32B 5/18, C08L 3/00

(54) **Foamed starch sheet**
Geschäumte Stärkeplatte
Plaque d'amidon expansé

(30) Priority: 15.02.2000 IT TO000141
(43) Date of publication of application: 29.08.2001
(73) Proprietor: NOVAMONT S.p.A., 28100 Novara (IT)
(72) Inventor: Bastioli, Angelo, 06034 Foligno, (Perugia) (IT); Bastioli, Catia, 28100 Novara (IT); Lombi, Roberto, 28100 Novara (IT); Salvati, Piero, 05100 Terni (IT)
(74) Representative: Rambelli, Paolo

(56) References cited:
- US-A- 5 153 037
- US-A- 5 437 924

## Description

### Background of the invention

The present invention relates to partly-finished products such as sheets of different thicknesses and profile based on destructured and/or complexed starch, expanded by means of an extrusion process, which can be used as such, variously treated, as biodegradable products and which can be formed at the output of the extrusion head or in a subsequent stage, and to products formed there from.

Starch-based products according to the invention are particularly suitable for use in the packaging sector.

The use of plastics materials such as polystyrene, polyurethane, polyethylene and polypropylene has until now dominated in the packaging sector; however, the problems of disposal associated with these products is opening new prospects for starch-based material in that they are biodegradable and from renewable sources, in particular in the foam materials sector.

The state of the art shows various approaches to the formation of foamed starch-based products. However, because of the nature and characteristics of starch it appears at present problematical to succeed in obtaining starch-based foamed products with optimum properties in terms of dimensions and cell distribution, and density of the partly-finished product such as to permit the conversion of the partly-finished product in a regular manner at an industrial rate into a competitive product as far as weight and performance is concerned, in particular as far as the aspect of fragility of the product at hinge points is concerned. This is particularly true for the preparation of starch-based foams utilised for the formation of sheets and associated moulded items.

US-A-5 153 037 describes a biodegradable shaped product comprising an expanded modified flour product having at least 40% by wt. amylose content and containing about 2% or more by wt. of an inorganic water soluble salt; there is also disclosed a foamed starch sheet having a density of 1.6 to 80.1 kg/m² and cell dimensions of 100 to 600 µm.

US-A-5 437 924 describes a laminated sheet comprising as a core a foamed starch sheet having a density of 32 to 144 kg/m³ and cell dimensions of 300 to 700 µm.

In particular, no starch-based partly-finished product is yet available on the market with starch in continuous phase, which is able to be shaped using an industrial process, with optimum properties in terms of dimensions, cell distribution and density such as to render the resultant product resilient, in particular in the hinge regions even after successive bending.

In effect, whilst much attention has until now been directed to research and making available various starch-based compositions comprising combinations with various synthetic polymers and additives, the problem of making available extrusion and foaming processes which make it possible to arrive at the production of foamed products having well determined properties such as homogeneity of the foamed structure, surface smoothness, and low fragility of the foamed workpieces has received limited attention.

The present invention provides foamed articles as defined in the appended claims.

The products according to the invention are obtained from starting compositions supplied to the extruder containing starchy material, water in percentages lying between 4 and 30 percent wt. of the total composition, a thermoplastic polymer as previously defined and possibly further additives such as plasticizers, lubricants, surfactants, weak acids, etc.. As far as the components of the starting composition are concerned, reference is made to European Patent Application EP/0 696 611.

In particular, the present invention relates to foamed, partly-finished products such as sheets of various thickness and profile which can be used themselves as products, and associated shaped on formed products comprising destructured and/or complexed starch as continuous phase in the partly-finished product and the finished product itself, as defined by the appended claims.

As far as the starch material is concerned, this can be both crude and modified starch or a mixture of these. The use of potato, wheat, maize and tapioca starch is preferred. As far as modified starches are concerned, these can be physically and chemically modified, for example ethoxylated starches, acetate starches, butyrate starches, propionate starches, hydroxypropylated starches, cationic starches, oxidated starches, cross-linked starches, gelatinised starches, starches complexed with molecules and/or polymers able to give "V" type complexes, dextrinated starches and starches grafted with chains such as polyesters, polyurethanes, polyesters-urethanes, polyureas, polyesters-ureas, polysiloxanes, silanes, titanates, fat chains and so on. The preferred chemically or physically modified starches are those with any kind of modification, which have an intrinsic viscosity, measured in DMSO at 30° C, lying between 2 dl/g and 0.6 dl/g, preferably between 1.5 dl/g and 0.8 dl/g, and more preferably between 1.3 dl/g and 1 dl/g.

It is intended that flours and meals resulting from the discharge from mill workings lie within the invention.

The term destructured starch is intended to mean a starch which has been treated thermally above the glass transition temperature and fusion temperature of its components to obtain the consequent disordering of the molecular structure of the starch grains and to render it thermoplastic. Reference is made in this respect to patens EP 118240 and EP 327505.

Complexed starches on the other hand mean a starch where the amylose component is partially or entirely engaged in the formation of "V" type complexes (single helix structures) which have second derivative X-ray spectral and FTIR characteristics.

With reference to the thermoplastic polymer, polymers having a melting point or glass transition point lying between 60 and 175 ° C are particularly relevant for the products according to the present invention, and in particular those having such points lying between 70 and 110 ° C.

The foamed articles of the invention comprise the polyesters defined in Claim 1 and may comprise further thermoplastic polymers.

In particular usable polymers are selected from:
- polymers of natural origin, which can be both modified and non-modified, in particular those derived from cellulose such as cellulose acetate, cellulose propionate, cellulose butyrate and their co-polymers, with a degree of substitution lying between 1 and 2.5; polymers of the alkyl cellulose type, hydroxyalkyl cellulose, carboxyalkyl cellulose, in particular carboxymethyl cellulose, nitrocellulose and chitosane, pullulan or casein and caseinate, zein, soya protein, alginic acid and alginates, natural rubbers, polyaspartates, gluten, dextrins;
- biodegradable polymers of synthetic or fermentative origin, in particular polyesters, such as polymers or co-polymers, of C₂-C₂₄ aliphatic hydroxyacids, or their corresponding lactones or lactides, in particular polymers of lactic acid having various D/L lactic acid ratios, and preferably with a D-lactic content comprised between 4 - 25% mole, co-polymers of polylactic acid with aliphatic polyesters and aromatic-aliphatic polyesters, polycaprolactone, polyvalerolactone, their co-polymers and polyesters derived from difunctional acids and aliphatic diols, aliphatic-aromatic polyesters, in particular co-polymers of the alkylene-terephthalate adipate type whether treated or not with chain extenders, preferably with quantities of terephthalic acid less than 40 mole percent, preferably less than 30% mole, epoxy resins in general and bisphenolic resins in particular;
- polymers able to interact the starch to form complexes, that is to say polymers which contain hydrophilic groups intercalated with hydrophobic sequences, for example, ethylenevinyl alcohol co-polymers, ethylenevinyl acetate co-polymers, acrylic esters, ethylene acrylic ester co-polymers, co-polymers of ethylene with unsaturated acids such as acrylic acid, methacrylic acid, crotonic acid, itaconic acid; co-polymers having alcoholic and carboxylic functional groups aliphatic polyesters and/or aliphatic-aromatic polyesters, epoxy resins including those containing bisphenol resins;
- polymers forming hydrogen bonds with starch, in particular, polyvinyl alcohols of varying degrees of hydrolysis, possibly modified as acrylates or methacrylates and polyvinyl alcohols preliminarily plasticised or modified for the purpose of lowering the melting point.

Preferred thermoplastic polymers are the polyvinyl alcohols, co-polymers of an olefinic monomer, preferably ethylene, with a monomer chosen from vinyl alcohol, vinyl acetate, acrylic acid and methacrylic acid, aliphatic polyesters derived from caprolactone, polyalkylenesuccinates, polymers of azelaic acid, sebacic acid, brassilic acid and their co-polymers, aliphatic polyamides, polyalkylenesebacates, polyalkylene-azelates, polyalkylenebrassilates, in particular with diols comprised between C₂-C₁₃, polyesters containing dimeric acids, aromatic-aliphatic polymers of the polyalkylene terephthalate adipate type and the epoxy resins, particularly with bisphenolic groups.

The extruded foamed partly-finished product according to the invention further preferably contains a nucleating agent. The use of a suitable nucleating agent in fact makes it possible to increase the homogeneity of the cells of the sheet. The quantity of nucleating agent utilised in the course of the process depends on the process conditions and the desired morphology for the extruded, partly-finished product. Preferably, the quantity of nucleating agent with respect to the starting composition lies in the range between 0.05 and 10 % by weight, preferably between 0.5 and 7 % and more preferably between 1 and 5 %.

Usable nucleating agents are, for example, inorganic compounds such as talc (magnesium silicate), calcium carbonate, sulphates such as sodium and barium, titanium dioxide etc, possibly surface treated with adhesion promotors such as silanes, titanates, etc. Organic fillers and fibres such as wood powder, cellulose powder, grape residue, bran, maize husks, other natural fibres in concentrations between 0.5 and 20% may also be utilised. Further, substances able to be dispersed and/or to be reduced in lamellas with submicronic dimensions, preferably less than 500 µm, more preferably less than 300 µm, and even more preferably less than 50 µm may be utilised in order to improve stiffness, water and gas permeability, dimensional stability. Particularly preferred are zeolites and silicates of various kind such as wollastonites, montmorillonites, hydrotalcytes functionalised with molecules able to interact with starch. Particularly preferred are submicronic particles of complexed starch also with specific functional groups introduced by virtue of silanes, titanates and other.

The starting compositions can moreover contain suitable additives such as lubricating agents and/or dispersants, flame retardants, colorants, plasticising agents, fillers etc. In particular, food oils such as palm, maize, soya, sunflower oil are particularly good, as are fatty acids from C₁₂ to C₂₂ and their glycerides with various degrees of substitution and in particular synthetic hydrogenated fats or fats of animal origin which are solid at least at ambient temperatures and, preferably, above ambient temperature to improve the moisture resistance and reduce wetability. It is also possible to use weak acids such as lactic, tartaric, citric acid etc to regulate the viscosity of the starch during the extrusion, and plasticizers such as glycerine, sorbitol, mannitol, pentaerithritol, and derivatives thereof, esters of citric acid and their derivatives.

The starting composition can be supplied directly to the extruder or can be supplied in the form of preliminarily extruded or pelletised granules.

### Process for the production of the sheet

The foamed, partly-finished product according to the invention is prepared by means of a process of extrusion of the basic starch composition effected by means of particular extruders such as slow twin screw extruders or two single screw tandem extruders in cascade or their combination, in such a way as to guarantee significantly long dwell times for the purpose of optimising the viscosity of the starchy material and the homogenisation of the nucleating agents and mixing of the foaming agents in the molten mass. In particular the use of a slow twin screw extruder is preferred.

In the performance of the extrusion process the extrusion temperature can vary as a function of the particular formulation and the desired properties of the partly-finished product and the finished product. The temperature control of the molten mass is therefore significant for obtaining products with specific characteristics.

The temperature of the molten mass in the course of the extrusion process can generally vary along the profile of the screw from 50 to 230° C, preferably between 60 and 210° C and more preferably between 70 and 200° C.

The foaming of the thermoplastic products according to the invention is achieved by the use of a suitable mixture of physical foaming agents which can also contain chemical foaming agents. In particular the use of CO₂ in gaseous form is preferred, in combination with water or CO₂ in gaseous form in combination with water and other physical and chemical foaming agents. Among the chemical foaming agents can be taken into consideration, among others, citric acid, bicarbonate and their combinations.

The foaming agent is preferably supplied to a region of the extruder in which the starting composition supplied to the extruder is present in the molten state. In particular the foaming agent is supplied to an advanced region of the extruder in such a way that the extrusion process is not altered by the phenomenon of regurgitation of the molten mass towards the extruder feed zone.

The CO₂ is supplied in concentrations greater than 0,4%, preferably greater than 0,8%, with respect to the total composition fed to the hopper, to a region where the melt is at a temperature lying between 100° C and 200° C, preferably between 130° C and 190° C. The mixture of CO₂ and H₂O and the specific concentrations are determining factors for the low density and the cell structure.

The quantity of CO₂ can vary in a range lying between 0,4% and 10% by weight, preferably between 0,8% and 7% and more preferably between 1% and 4% by weight. The CO₂ is added to the melt. The total water content of the composition fed to the hopper of the extruder for the expansion is lying between 4% and 30% by weight, preferably between 8% and 20% and more preferably between 10% and 18% by weight.

The extruder can be completed by extruder heads of the flat or tubular type; tubular heads are particularly preferred.

Preferably the configuration of the head of the extruder is such as to guarantee a homogeneous supply to the nozzle. With the starting compositions of the foam sheet according to the invention this problem is relevant since small variations of shear rate can generate significant variations in the local viscosity, with consequent alterations in the foaming process and therefore manifest irregularities in the sheet in terms of thickness thereof, cell dimensions, presence of preferential flow etc.

The head of the extruder is therefore preferably configured in such a way as to cancel the elastic memory of the material and, at the same time, not create any foam before the entry of the material into the nozzle. The preferred extrusion shear rate ranges for the sheet are between 500 and 50,000 sec⁻¹, preferably between 800 and 40,000 sec⁻¹, and more preferably between 900 and 35,000 sec⁻¹.

At the output from the extrusion head, and before the forming process, the foamed sheet according to the invention can be laminated with layers of non-woven fabric, textile, paper, biodegradable and non-biodegradable films, or aluminium. As far as the non-woven or textile fabrics are concerned these can be made of natural fibres, such as, for example, fibres of jute, cotton, wool, fibres based on polysaccharides such as, for example, cellulose acetate, starch acetate, viscose etc, or fibres produced from biodegradable polymers and in particular aliphatic polyesters such as polylactic acid, polycaprolactone, polyalkylene carboxylate with dialcohols and diacids selected from the linear range C₂-C₁₃ and/or cycloaliphatic, aliphatic-aromatic polyesters, in particular of the family of terephthalate polyalkylene adipates and their co-polymers, particularly with a terephthalic acid content less than 55% with respect to the amount of terephtalic acid + adipic acid, polyamides in particular based on caprolactam, aliphatic amines etc, aliphatic polyurethanes, polyester-urethanes, polyurea, and epoxy resins. The above biodegradable polymers can be utilised also in the form of films for lamination or coating.

The films are generally coupled to the sheet through temperature and/or the application of suitable biodegradable adhesives based on polymers, lactic acid, polyurethanes, polyvinyl acetates and polyvinyl alcohol, proteins such as casein and glutens, starches and other polysaccharides, hot melts particularly based on aliphatic polyesters.

The films can be obtained by casting or bubble film-forming and can be co-extruded with an adhesive surface for the foam support. Films with a melting point greater than 60° C, preferably greater than 80° C, and more preferably greater than 100° C, are preferred.

The partly-finished product coupled to film can be used unformed, as the sheet as such, or in a foaming or shaping process to form finished products.

For the coating it is possible to utilise emulsions, solutions or dispersions of the type described in European patent EP 696612 for the treatment of expanded particles, considered included within the present invention. Natural and synthetic waxes can also be utilised, with melting points up to 120° C depending on the application. In this case the treatment can be before or after the forming or shaping stage.

The foam sheet may also be co-extruded with expanded layers of other starch based materials so to have differentiated properties between the inside and the outside of a multiplayer or it may be co-extruded with layers of materials having lower hydrophilicity such as the polyesters above mentioned for the laminated films.

The foam sheet according to the invention must be obtained starting from a homogeneous molten mass in which the nucleating agents and the gas and/or vapours are homogeneously dispersed throughout the molten mass. For this the dwell times in the extruder must lie between 5 and 40 minutes, preferably between 10 and 35 minutes, and more preferably between 15 and 25 minutes.

The foam sheet can be controlled in thickness by the extrusion conditions and calendering.

In the case of tubular sheet the head can be provided with air or steam blowing systems from within, as in the case of bubble film-forming, or orientation by air or steam blowing to distend the sheet and give it a biaxial stretch, avoiding or regulating the formation of waves. The sheet can have a thickness lying between 0.5 mm and 15 mm, preferably between 1,0 mm and 10 mm. The thickness of the partly-finished product can be achieved by stretching and calendering the sheet.

The foam sheet may be corrugated and the corrugations may be exploited in order to increase the cushion properties of the foam. The corrugations may have different width and height. The height, which corresponds to the thickness of the resulting panel, may be about the double of the foam sheet thickness. The frequency of the corrugations may reach 350 per linear metre.

Sheets of this type can be combined together in multi layers, forming different geometries for different products in the packaging sector such as sheets and expanded blocks of high resilience, corners or protection containers. Specific examples of the sectors suitable for application are those of electrical domestic equipment, electronic products, the food sector, pharmaceuticals, design and furniture, mail order, and envelopes for couriers. The sheets can be utilised also in combination with other supports to form multi layers mixed with wood, paper, cardboard, textiles of natural and synthetic fibres, aluminium and other metals. In particular, the products of this type can be directly anchored to the piece to be packaged, exploiting their characteristic adhesiveness upon moistening or, preferably, with hot melts or melts to be sprayed.

Products obtained from coupling sheets or formed products can be protected by an external film to increase performance.

Products can also be rolls and tubes obtained by winding and gluing sheets, or by directly extruding tubes. Rolls and tubes can be utilised as supports for toilet paper, kitchen paper or other types or may be used as protection for cylindrical things such as bottles and others.

### Process for forming the sheet

Forming can be achieved by a continuous process or by a batch process.

The production of expanded products according to the invention by means of continuous processes provides for the extrusion/calendering phase, a possible conditioning phase and the forming phase to be consecutive. The production of foamed products according to the invention by means of batch processes provides for the extrusion/calendering phase with winding of the sheet into coils or collection in sheets; the partly-finished products can them be conditioned and formed in a second phase.

In a continuous foaming process it is envisaged that the partly-finished product in the form of sheet from the extruder would be maintained at a temperature not less than 40° C, and preferably not less than 80 ° C and having a water content lying between 6 and 30% by weight, preferably between 10 and 25% by weight and more preferably between 15 and 20% by weight. The temperature ;of the sheet must not exceed 150° C and preferably 100° C.

In particular, if synthetic components are present, the forming temperature must be close to the glass transition temperature or the melting point of the thermoplastic polymer.

It is also possible to form the partly-finished product by a batch process by subjecting it to a preliminary conditioning process for the water content and temperature range referred to above for continuous processes.

The conditioning stage can immediately precede or be coincident with the forming station.

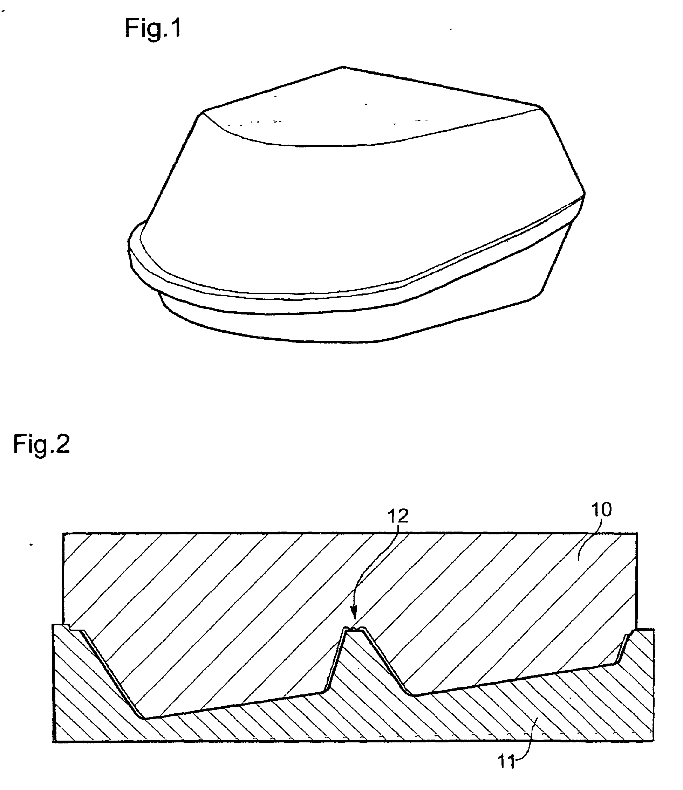

Products even of complex form, provided with particular, even aesthetic, characteristics such as, for example, the clam shell illustrated in Figure 1, can be obtained with a forming process at ambient temperature, and in any event at temperatures not greater than 100° C, between abutting male and female mould to define the maximum level of compression and the final minimum thickness of the product.

A die for the forming of the clam shell of Figure 1 with the foam sheet according to the present invention is illustrated, as a way of example, in Fig. 2. Male (10) and female (11) may be designed in such a way that they do not get in touch just next to the lateral walls of the clam shell. Such room between male and female allows the slipping of the foam sheet without tears during the forming.

The process forming the subject of the invention, together with the characteristics of the partly-finished product generally allow forming cycles less than 20 seconds, preferably less than 10 seconds and more preferably less than 7 seconds. With reference to the forming process, the parameters relating to the water content and temperature are critical for the achievement of a good formability of the partly-finished product. The loss of water vapour from the partly-finished product at the outlet from the extruder nozzle in fact makes it necessary to exercise a strict control on the level of removal of water for the purpose of avoiding both phenomena of collapse and phenomena of excessive drying.

Forming can take place in moulds or dies at ambient temperature on expanded but unopened tubular sheets. This system makes it possible simultaneously to mould two layers of sheet per mould, limiting the problems of drying of the sheets. If the tubular sheets are conveniently offset from one another it is possible to obtain a surface of the product having an aspect similar to the surface weave of a fabric.

Forming is normally conducted on an opened tube. In this case the water content is regulated by utilising a conditioning station which uses steam.

### Characteristics of the sheet

The material which constitutes the partly-finished product or foamed sheet forming the subject of the present invention has an intrinsic viscosity in DMSO at 30° C lying between 1.5 and 0.3 dl/g, preferably lying between 1.2 and 0.4 dl/g and more preferably between 1 and 0.6 dl/g.

In expanded partly-finished products according to the invention the cell dimension can vary in a range lying between 25 and 700 µm and preferably between 40 and600 µm (as determined by microscopic inspection).

The expanded partly-finished product has closed cell morphology in which the cells are substantially non communicating with one another, which is different from the open cell morphology in which the cells are largely interconnected with one another.

The partly-finished products have a density lying between 20 and 150 kg/m³, preferably lying between 25 and 100 kg/m³, more preferably between 30 and 70 kg/m³.

The foam structure of the sheet is characterised by a cell distribution in which 80% of the cells present, in the absence of stretching, have a dimension lying between 25 and 400 µm, preferably between 25 and 300 µm and more preferably between 30 and 200 µm.

When a stretch is applied to the sheet the cells can, however, be subjected to an orientation with thinning of the wall.

Also within the scope of the present invention is a sheet with optimised resilience properties, a density characteristic lying between 30 and 70 kg/m³ and with an average cell dimension between 80 and 120µm.

Products forming the subject of the present invention are principally used in the food packaging sector and in particular as trays for food with a lifetime of the order of 30 days, for the packaging of meat, milk products, vegetables, eggs and fruit; holders for packages of glass, plastics or metal of very small dimensions, containers for fast food such as containers for hamburgers, potato chips and similar products; multi compartment containers for foods, known also as lunch boxes, cups for coffee and other hot or cold drinks for fast food and meals.

The formed products of the present invention are also used as containers for objects of small weight such as multicompartment trays for portable telephones and small electrical domestic appliances in particular, with mechanical properties such as to avoid phenomena of abrasion encountered with containers of pressed paper etc.

In the case of food applications where liquids at high or low temperatures are to be expected, the containers can be co-extruded or coupled to another layer of foam or polyester film and/or cellulose acetate and/or starch or other polymer resistant to liquids at the temperature which will be experienced in use. In particular films of aromatic-aliphatic polyester type can be utilised and, specifically, polyalkylene terephthalate adipates, alkylene butyrates, polyalkylene succinates, polyalkylene sebacates, polyalkylene azelates, polycyclic alkylene dicarboxylates, in particular polyhexyldimethyldicarboxylates, olycyclohexyldicarboxylates. If it is necessary to absorb liquids as in the case of packaging for meat it is possible to consider the use of superabsorbent material which can inserted directly into the sheet, applied to the surface or in intermediate layers between two shells welded together or under the film which makes the tray impermeable.

Also to be considered the subject of the present invention are products formed for ovens and microwaves, possibly characterised by treatments with water-repellent coatings to avoid drying of the container during the cooking phase.

### Characteristics of the formed products

Formed products according to the invention have a closed cell structure with a relatively low density lying between 40 and 400 kg/m³, preferably between 45 and 200 kg/m³ and more preferably between 50 and 150 kg/m³.

Products formed according to the invention further have good properties of flexibility, in particular in the hinge region, thanks to the fine and homogeneous morphology of the cells. Such products also have a very good uniform surface.

Hinges, such as for examples the one numbered as 12 in Figure 2, can be produced in products obtained in the forming phase, by forming ribs of the type used for cardboard hinges, are resistant to at least ten (preferably > 20) consecutive opening at 180°/closing cycles at 35% RH and 23°C without breakage, using about 2-4 seconds for each opening at 180°/closing operation, and preferably at least 100 consecutive opening and closing cycles at 40% RH and 23°C without breaking, using about 2-4 seconds for each opening/closing cycles.

The good properties of flexibility can be tested also with a dynamometer with a climatic cell adapted to adjust the temperature and relative humidity at the above values. Samples of 25 x 10 cm with an hinge at the middle of their length can be submitted to opening/closing cycles from 0 to 180° with a velocity of in the range of 3000 - 10,000 mm/min of the mobile bar of the dynamometer.

### Examples

Example 10, which follows, relates to a product according to the invention ; examples 1-9 relate to foamed products obtained from a mixture not including the polyesters of Claim 1.

### Example 1

A mixture was prepared having the following composition:
- 88.9% of destructured potato starch with an intrinsic viscosity in DMSO at 30°C of 1.1 dl/g and the water content of 14%.
- 8.9% by weight of polyvinylalcohol
- 1.8% by weight of talc
- 0.35% by weight of glycerol
- 0.36% by weight of loxial G10
- 2% by weight of water.

The composition was supplied to a slow twin screw extruder with co-rotating screws having a diameter (d) = 113.8 mm and L/D ratio = 19:1. At the end of the extruder was mounted an extrusion head for a tubular sheet with a diameter of 100 mm and lip opening of 0.5 mm. The dwell time of the melt in the extruder was about 20 minutes.

In addition to the water contained in the feed mixture, a further 1% by weight of CO₂ was also added to the molten mass as a further expansion agent, at a feed pressure equal to 37 bar. The CO₂ was introduced at the level of the eleventh diameter of the screw.

The operating conditions were as follows:
- RPM :16
- Temperature profile (°C) : 95/120/120/150/180/180/185/190/197
- Feed rate :54 kg/h
- Lip shear rate :912 sec ⁻¹

The foamed sheet obtained had a density of 56 kg/m³ and a cell dimension lying between 40 and 170 µm, the average value of the cell dimension was 81 µm.

The intrinsic viscosity of the material constituting the sheet, taken in DMSO at 30°C, is 0.68dl/g.
The sheet was wound in a coil.

### Example 2

A mixture was prepared having the following composition:
- wheat starch 34.4% (12% H₂O)
- potato starch 34.4% (16% H₂O)
- polyvinylalcohol 13.5%
- H₂O 17.4%
- Monoglyceride oleic acid 0.3%

This mixture was supplied to a twin screw APV 2080 extruder having a diameter (d) = 80mm and L/D ratio = 40. It was operated in the following conditions:
- RPM : 285
- Temperature profile: 50/75/75/180/180/170/170/175/175/165/165/155/155/145/120
Degassing was regulated in such a way as to maintain in the granules a total water content of about 14.5%. The intrinsic viscosity of the pellets was 1.98 dl/g.

The granules thus obtained were mixed with 2.5% of talc having an average particle diameter of about 1.5 µm and supplied to a slow twin screw extruder with co-rotating screws having a diameter (d) = 113.8 mm and L/D ratio = 19:1 with an extrusion head for tubular sheet of 100 mm in diameter and 0.4 mm of lip separation, operating in the following conditions:
- RPM :14
- Temperature profile (°C): 90/120/120/140/165/165/170/186/186
- Feed rate :50 kg/h
- Shear rate :1360 sec⁻¹

To the molten mass was added, as a further expanding agent, CO₂ in quantities equal to 1.5% by weight at a feed pressure equal to 40 bar.
The tubular sheet obtained had a thickness equal to about 3 mm a density of 70 kg per m³ and an average cell dimension equal to 90 µm (minimum/maximum cell dimension = 10/290 µm). The water content of the sheet was equal to about 1.8% by weight and the intrinsic viscosity of the material constituting the sheet was m = 1.1 dl/g.

### Example 3

The tubular sheet obtained by the example 2 was opened by subjecting it to a calendering and steam conditioning process until it had a water content in the sheet equal to 15 %. The forming was achieved by means of a suitable mould, such that illustrated in figure 2, of the male-female type for hinged trays of the clam shell type suitable for fast food products.

Forming was conducted with dies at ambient temperature on the sheet maintained at a temperature about 80°C by applying a pressure of 6 kg/cm². The moulding cycle was about 6 seconds and the product thus obtained had a thickness equal to about 1.6 mm and a density in the bottom wall of 165 kg/m³.

In particular, the product obtained was constituted by two asymmetrical valves having a length of 12.5 cm connected by a hinge 10 cm wide. This hinge zone had particular properties of mechanical strength. After 20 successive bendings for a time of 3 seconds (corresponding to about 5000 mm/min) for opening/closure cycles at 35% RH and 23° C it continued to perform its function.

The product obtained also had a very smooth surface constituted by super-imposed flattened ribs which confer on the product a pleasing aesthetic aspect.

### Example 4

The coiled sheet obtained according to example 1 was maintained at a water content of 14%. To the sheet was applied a film of 14 µm of polybutyleneterephthalate-adipate containing 33% by mole of terephthalate with an intrinsic viscosity in THF of 1.1 dl/g. The sheet with the applied film was brought to 80°C and formed in the mould described in example 3. The container obtained was resistant to water at 80°C for an hour, the time necessary for the temperature to fall from 80°C to 20°C without any collapse or soaking of the foamed starch container.

### Example 5

As for example 4, with the single difference of having applied a film of polyethylene sebacate. The tray was perfectly resistant to water without becoming saturated and/or collapse of the starchy product.

### Example 6

As for example 4, with the exception of the application of a non-woven fabric of viscose of 30 g/m², in place of the polyester film.

### Example 7

As for example 4, with the exception that the polyester film was replaced by a foamed sheet of polyethylene sebacate of a density of 80 kg/m³ and a thickness of 300 µm.

### Example 8

As for example 4, with the exception that the film was applied to both sides. The resultant tray was utilised for packaging trials of beef. The results related to the mechanical properties and to the preservation of the meat were comparable to the ones observed for trays made with expanded polystyrene.

### Example 9

The tubular sheet obtained according to process of example 1 was formed directly in the conditions of example 3 with a male/female mould in the form of a tray 2.5 cm deep and 15 x 12 cm, to form a double container with a thickness of about 3 mm. The double container was positioned between two films of the type described in example 4, of 10 µm which were welded together forming a bag within which the tray was contained. The film was heat shrunk to form a compact and impermeable product for meat.

### Example 10

A mixture was prepared having the following composition:
- 74.3% by weight of potato starch (H₂O 16%)
- 10.0% by weight of Ecoflex EBX 7000 (BASF)
- 0.3% by weight of Loxiol G 10 F
- 15.4 by weight of water.
The composition was supplied to a twin screw extruder APV 2030 with (d) = 30.0 mm and L/D = 40. The operating conditions were as follows:
- RPM :170
- Temperature profile (°C) : 30/100/100/150/160/150/140/130/110 x 8
The degassing step was adjusted so as to have in the pellets a water content of about 13.5-14.5%.

The pellets were then mixed with 2.5% of talc, with particles having mean diameter of 1.5 µm, and subsequently fed to a slow twin screw extruder with co-rotating screws having a diameter (d) = 113.8 mm and L/D ratio = 19:1. At the end of the extruder was mounted an extrusion head for a tubular sheet with a diameter of 100 mm and lip opening of 0.1 mm. The operating conditions were as follows:
- RPM :14
- Temperature profile (°C) : 90/120/140/180/210/210/210/195/196
- Feed rate :75 kg/h
- shear rate :31531 sec ⁻¹

A further 0.8% by weight, with reference to the fed composition, of CO₂ was also added to the molten mass as a further expansion agent, at a feed pressure equal to 40 bar. The obtained foamed sheet had a thickness of about 5 mm, a density of 81 kg/m³ (calendered) and a average value of the cell dimension of 86 µm (cell dimension lying between 35 and 188 µm).

## Claims

1. A foamed article, in particular in the form of a foamed sheet useful as a partly-finished product adapted to be further processed into a finished article of manufacture, comprising destructured or complexed starch foamed as a continuous phase and a thermoplastic polymer, said article having a density lying between 20 and 150 kg/m³, cell dimensions in a range lying between 25 and 700 µm with a cell distribution such that 80% of them have, in the absence of stretching, a dimension lying between 25 and 400 µm, **characterized in that** the material from which the foam is made has an intrinsic viscosity in DMSO at 30° lying between 1.5 and 0.3 dl/g and said thermoplastic polymer comprises polyesters derived from difunctional acids and aliphatic diols or aliphatic-aromatic polyesters.

2. A foamed article according to claim 1, having a cell distribution such that 80% of them have, in the absence of stretching, a dimension lying between 25 and 300 µm.

3. A foamed article in particular in the form of a foamed sheet, according to claim 1 having a density lying between 25 and 100 kg/m³ and cell dimensions in a range lying between 40 and 600 µm.

4. A foamed article, in particular in the form of a foamed sheet, according to claim 2 having a density lying between 30 and 70 kg/m³ and with a cell distribution such that 80% of them have, in the absence of stretching, a dimension lying between 30 and 200 µm.

5. A foamed article, in particular in the form of a foamed sheet, according to claim 1 having a density lying between 30 and 70 kg/m³ and average cell dimensions lying between 80 and 120 µm.

6. A foamed article according to any of claims 1 to 5, in which the starch is natural or modified starch or a mixture of these.

7. A foamed article according to claim 6 in which the natural or modified starch is derived from potato, wheat, maize or tapioca.

8. A foamed article according to claim 6 wherein the modified starch is physically or chemically modified, particularly selected from ethoxylated starches, acetate starches, butyrate starches, propionate starches, hydroxypropylated starches, cationic starches, oxidated starches, cross-linked starches, gelatinised starches, starches complexed with molecules and/or polymers able to give "V" type complexes, dextrinated starches and starches grafted with chains such as polyesters, polyurethanes, polyesters-urethanes, polyureas, polyesters-ureas, polysiloxanes, silanes, titanates, fat chains.

9. A foamed article according to any of claims 1 to 8, which has been formed into an article with hinges obtained in a forming phase, wherein said hinge is capable of resisting at least ten consecutive opening/closing cycles at 35% RH and 23°C without breaking, by using 2 - 4 seconds for each opening and closing operation.

10. A foamed article according to any of claims from 1 to 9, in which the intrinsic viscosity in DMSO at 30°C is lying between 1.2 and 0.4 dl/g.

11. A foamed article according to any of claims from 1 to 10, in which the intrinsic viscosity in DMSO at 30°C is lying between 1.1 and 0.6 dl/g.

12. A foamed article according to any of claims from 1 to 11, containing one or more thermoplastic polymers with a melting point lying between 60 and 175°C.

13. A foamed article according to claim 12 in which the thermoplastic polymer comprises co-polymers of the type including alkylene-terephthalate adipate treated or not with chain extenders, preferably with quantities of terephthalic acid less than forty mole percent.

14. A foamed article according to claim 12 containing polyvinylalcohol, the polymers of azelaic acid, sebacic acid brassilic acid and their co-polymers, polyalkylensebacates, polyalkylene-azelates, polyalkylenbrassilates, with diols comprised between C₂-C₁₃ and aromatic-aliphatic polymers of the polyalkylene terephthalate adipate type.

15. A foamed article according to any of claims from 1 to 14, containing nucleating agents for the starting composition in concentrations lying in the range from 0.05 to 10% by weight, preferably between 0.5 and 7% and more preferably between 1 and 5%.

16. A foamed article according to claim 15, in which the nucleating agent is constituted by inorganic compositions such as talc (magnesium silicate), calcium carbonate, sulphates of sodium and barium, titanium dioxide, possibly surface treated with adhesion promoters such as silanes, titanates.

17. A foamed article according to any of claims from 1 to 16, containing organic fillers and fibres such as wood powder, cellulose, grape residue powder, bran, maize husks or other natural fibres in concentrations between 0.5 and 20%.

18. A foamed article according to any of claims from 1 to 17, containing nucleating agents, lubricants and/or dispersants and plasticizers.

19. A foamed article according to any of claims from 1 to 18, containing alimentary oils such as palm oil, maize oil, soy oil, sunflower oil, C₁₂ to C₂₂ fatty acids, their glycerides with various degrees of substitution, and in particular hydrogenated fats of animal or synthetic origin which are solid at least at ambient temperatures, and preferably above ambient temperatures, to improve the moisture resistance and reduce the wettability by water.

20. A foamed article according to any of claims from 1 to 19, containing weak acids such as lactic acid, tartaric acid, citric acid to regulate the viscosity of the starch during the extrusion process.

21. A foamed article according to any of claims 1 to 20, which is laminated with layers of non-woven fabric, woven fabric, paper, biodegradable and non-biodegradable films or aluminium.

22. A foamed article according to claim 21 produced by lamination with non-woven fabric or woven fabric of natural fibres, such as fibres of jute, cotton, wool, fibre based on polysaccharides, such as cellulose acetate, starch acetate, viscose, or fibres produced starting from biodegradable polymers and in particular aliphatic polyesters such as polylactic acid, polycaprolactone, polyalkylene carboxylates with dialcohols and diacids selected from the range C₂-C₁₃ either linear and/or cycloaliphatic, aliphatic-aromatic polyesters, in particular from the family of polyalkylene terephthalate adipates and their co-polymers, polyamides, in particular based on caprolactam, aliphatic amine, aliphatic polyurethanes, polyester-urethanes, polyurea, and epoxy resins.

23. A foamed article according to claim 21, coupled with films constituted by biodegradable polymers and in particular aliphatic polyesters such as polylactic acid, polycaprolactone and/or cycloaliphatics, polyalkylene carboxylates with dialcohols and diacids in the range C₂-C₁₃ either linear or cycloaliphatic, aliphatic-aromatic polyesters, in particular from the family of polyalkylenes terephthalate adipate and their co-polymers, polyamides, in particular based on caprolactam, aliphatic amines, aliphatic polyurethanes, polyester-urethanes, polyureas, epoxy resins obtained by blown extrusion, co-extrusion and/or casting.

24. A foamed article according to any of claims from 1 to 20, including a coating with emulsions, dispersions, solutions, hot melts of biodegradable polymers and in particular of aliphatic polyesters such as polylactic acid, polycaprolactone, polyalkylene carboxylates with dialcohols and diacids selected in the range C₂-C₁₃ either linear and/or cycloaliphatic, aliphatic-aromatic polyesters, in particular from the family of polyalkylene terephthalate adipate and their co-polymers, polyamides, in particular based on caprolactam, aliphatic amines, aliphatic polyurethanes, polyester-urethanes, polyureas, epoxy resins.

25. A foamed article according to claim 23, in which the films are coupled to the article by temperature and/or the application of suitable biodegradable adhesives based on polymers of lactic acid, polyurethanes, polyvinylactates and polyvinylalcohols, proteins such as casein and gluten, starches, dextrins and other polysaccharides.

26. A foamed article according to claims 23 and 25, in which the films can be obtained from cast and bubble film-forming and can be co-extruded with an adhesive surface for the foamed article.

27. A foamed article according to claim 26, in which the films have a melting point greater than 60°C, preferably greater than 80°C and more preferably greater than 100°C.

28. A foamed article according to claim 23 or claim 25 consisting of a formable sheet.

29. A foamed article according to any of claims 1 to 20, treated with natural and synthetic waxes with melting points up to 120°C in depending on their various applications.

30. A process for the production by extrusion of a foamed article according to any of claims 1 to 29, in the form of foamed sheet, comprising the steps of:
- supplying to an extruder starch with an intrinsic viscosity lying between 2 and 0.6 dl/g in the presence of water in proportions from 6 to 30% by weight of the total composition, in quantities such as to permit the starchy component constitute the continuous phase of the material, and said thermoplastic polymer and optionally further additives such as plasticizers, lubricants, nucleating agents, surfactants, weak acids and fillers;
- complete melting of the starchy mass;
- introduction of CO₂ in quantities lying between 0.4 and 10%, preferably between 0.8 and 7% and more preferably between 1.0 and 4% by weight into the melt at a temperature lying between 100 and 180°C, preferably between 120 and 160°C; and
- working the melt for between 5 and 40 minutes to homogenise the distribution of the mixture of expanding agents, water and CO₂ and, possibly, chemical expanding agents such as citric acid and bicarbonate, and to adjust the viscosity of the composition to between 1.5 and 0.3 dl/g.

31. A process according to claim 30 in which the extrusion of the melt takes place through a flat or tubular head able to impart to the melt shear rates comprised between 500 and 50,000 sec⁻¹ preferably between 800 and 40,000 sec⁻¹ and more preferably between 900 and 35,000 sec⁻¹.

32. A process according to claim 31 in which the sheet is extruded in a tubular form and is blown with air or steam to impart biaxial stretch, confer smooth surfaces and hold the sheet at the desired moisture point, opened, calendared, possibly further conditioned and wound on a coil.

33. A process according to claim 31 in which the sheet is extruded in a tubular form and is blown with air or steam to distend the sheet itself and hold it at the desired moisture point, opened, calendered and cut into flat sheets.

34. A process according claim 31, in which there is produced a partly-finished product in the form of a tube which is calibrated, conditioned and then collected.

35. A process for forming a foamed article according to any of claims from 1 to 29 into a shaped article, which comprises:
- conditioning said foamed article to a water content between 6% and 30% preferably between 10% and 25% and more preferably between 15% and 20% and at a temperature between 40°C and 120°C and preferably between 40°C and 100°C,
- forming in a male-female impact mould between ambient temperature and 80°C; and
- possible creasing to provide a product formed with a density between 40 and 400 kg/m³ preferably between 45 and 200 kg/m³ and more preferably between 50 and 150 kg/m³ possibly having a hinge resistant to repeated closure/opening cycles.

36. A foamed article according to any of the claims 1 to 29, resulting from the combination of foamed sheets according to any of claims 1 to 32 in multilayer structures, to form articles of various geometry such as rolls, blocks and foam sheet of significant resilience, corner pieces, protective containers for use in the electrical domestic appliance sectors, or for electronic products, in the food sector, for pharmaceuticals, for design and furniture, for mail order or envelopes for couriers.

37. A foamed article according to claims 1 to 29, resulting from the combination of foamed sheets according to claims 1 to 28, with other supports to provide multilayers mixed with wood, paper, cardboard, non-woven fabric, woven fabric of natural or synthetic fibres, aluminium or other metals for use in the packaging sector.

38. The use of the articles formed according to claim 35 in the food packaging sector and in particular as trays for foods with a lifetime of the order of 30 days for packaging meat, dairy products, vegetables, eggs, fruit; display containers for glass, plastic or metal packages of small dimensions, containers for fast food such as containers for hamburgers, potato chips and similar products; multi compartment containers for fast food and meals.

39. The use of articles formed according to claim 35, as containers for hot and cold liquids as cups for coffee and drinks, containers for soup of the type used in Asiatic countries and for other products having a high liquid content for fast food and meals.

40. The use of articles formed according to claim 35, as containers for objects of small weight such as multicompartment trays for portable telephones and small electrical domestic appliances, in particular, with mechanical properties such as to avoid phenomena of abrasion encountered with containers of pressed paper.

41. The use of articles formed according to claim 35, as trays for wrapping meat in supermarkets, said trays including absorbent or super absorbent materials for eliminating the presence of blood, said absorbent material being fitted directly into the sheet material forming the tray, or applied to the surface or in intermediate layers between two shells welded together or under the film which renders the tray impermeable.

42. The use of articles formed according to claim 35, as containers for oven and microwave use possibly surface treated to avoid excessive weakening of the container by the effect of the removal of the water.

## Patentansprüche

1. Geschäumter Gegenstand, insbesondere in Form einer geschäumten Platte, welcher als Teilfertigprodukt nützlich ist, das dafür angepasst ist, in ein fertiges Fabrikat weiterverarbeitet zu werden, umfassend destrukturierte oder komplexierte Stärke, die als kontinuierliche Phase geschäumt ist, und ein thermoplastisches Polymer, wobei der Gegenstand eine Dichte im Bereich zwischen 20 und 150 kg/m³ und Zellabmessungen im Bereich zwischen 25 und 700 µm mit einer solchen Verteilung der Zellen aufweist, dass 80% von ihnen bei fehlender Verstreckung eine Abmessung im Bereich zwischen 25 und 400 µm haben, **dadurch gekennzeichnet, dass** das Material, aus dem der Schaumstoff hergestellt ist, in DMSO bei 30° eine innere Viskosität im Bereich zwischen 1,5 und 0,3 dl/g aufweist und das thermoplastische Polymer Polyester, die von difunktionellen Säuren und aliphatischen Diolen abgeleitet sind, oder aliphatisch-aromatische Polyester umfasst.

2. Geschäumter Gegenstand gemäß Anspruch 1, welcher eine solche Verteilung der Zellen aufweist, dass 80% von ihnen bei fehlender Verstreckung eine Abmessung im Bereich zwischen 25 und 300 µm haben.

3. Geschäumter Gegenstand, insbesondere in Form einer geschäumten Platte, gemäß Anspruch 1, welcher eine Dichte im Bereich zwischen 25 und 100 kg/m³ und Zellabmessungen im Bereich zwischen 40 und 600 µm aufweist.

4. Geschäumter Gegenstand, insbesondere in Form einer geschäumten Platte, gemäß Anspruch 2, welcher eine Dichte im Bereich zwischen 30 und 70 kg/m³ mit einer solchen Verteilung der Zellen aufweist, dass 80% von ihnen bei fehlender Verstreckung eine Abmessung im Bereich zwischen 30 und 200 µm haben.

5. Geschäumter Gegenstand, insbesondere in Form einer geschäumten Platte, gemäß Anspruch 1, welcher eine Dichte im Bereich zwischen 30 und 70 kg/m³ und durchschnittliche Zellabmessungen im Bereich zwischen 80 und 120 µm aufweist.

6. Geschäumter Gegenstand gemäß einem der Ansprüche 1 bis 5, wobei die Stärke natürliche oder modifizierte Stärke oder eine Mischung davon ist.

7. Geschäumter Gegenstand gemäß Anspruch 6, wobei die natürliche oder modifizierte Stärke von Kartoffel, Weizen, Mais oder Tapioka gewonnen wird.

8. Geschäumter Gegenstand gemäß Anspruch 6, wobei die modifizierte Stärke physikalisch oder chemisch modifiziert ist und insbesondere aus ethoxylierten Stärken, Acetatstärken, Butyratstärken, Propionatstärken, hydroxypropylierten Stärken, kationischen Stärken, oxidierten Stärken, vernetzten Stärken, gelatinierten Stärken, Stärken, die mit Molekülen und/oder Polymeren komplexiert sind, welche imstande sind, "V"-artige Komplexe zu erzeugen, dextrinierten Stärken und Stärken, die mit Ketten, wie z.B. Polyestern, Polyurethanen, Polyesterurethanen, Polyharnstoffen, Polyester-Harnstoffen, Polysiloxanen, Silanen, Titanaten, Fettketten, aufpolymerisiert sind, ausgewählt ist.

9. Geschäumter Gegenstand gemäß einem der Ansprüche 1 bis 8, welcher zu einem Gegenstand mit in einer Formungsphase erhaltenen Drehgelenken geformt wurde, wobei das Drehgelenk imstande ist, mindestens zehn aufeinanderfolgenden Öffnungs-/Schließzyklen bei 35% RH und 23°C standzuhalten, ohne zu zerbrechen, wobei für jeden Öffnungs- und Schließvorgang 2-4 Sekunden angewandt werden.

10. Geschäumter Gegenstand gemäß einem der Ansprüche 1 bis 9, wobei die innere Viskosität in DMSO bei 30°C im Bereich zwischen 1,2 und 0,4 dl/g liegt.

11. Geschäumter Gegenstand gemäß einem der Ansprüche 1 bis 10, wobei die innere Viskosität in DMSO bei 30°C im Bereich zwischen 1,1 und 0,6 dl/g liegt.

12. Geschäumter Gegenstand gemäß einem der Ansprüche 1 bis 11, welcher einen oder mehrere thermoplastische Polymere mit einem Schmelzpunkt im Bereich zwischen 60 und 175°C enthält.

13. Geschäumter Gegenstand gemäß Anspruch 12, wobei das thermoplastische Polymer Copolymere jenes Typs umfasst, der Alkylenterephthalatadipat einschließt, das mit Kettenverlängerern, vorzugsweise mit Mengen an Terephthalsäure von weniger als vierzig Molprozent, behandelt wurde oder nicht.

14. Geschäumter Gegenstand gemäß Anspruch 12, welcher Polyvinylalkohol, die Polymere von Azelainsäure, Sebacinsäure, Brassylsäure und deren Copolymere, Polyalkylensebacate, Polyalkylenazelate, Polyalkylenbrassilate mit zwischen C₂ und C₁₃ enthaltenen Diolen und aromatisch-aliphatische Polymere des Polyalkylenterephthalatadipat-Typs enthält.

15. Geschäumter Gegenstand gemäß einem der Ansprüche 1 bis 14, welcher Keimbildner für die Ausgangszusammensetzung in Konzentrationen im Bereich von 0,05 bis 10 Gew.%, vorzugsweise zwischen 0,5 und 7% und noch bevorzugter zwischen 1 und 5%, enthält.

16. Geschäumter Gegenstand gemäß Anspruch 15, wobei der Keimbildner aus anorganischen Zusammensetzungen, wie z.B. Talk (Magnesiumsilikat), Calciumcarbonat, Natrium- und Bariumsulfaten, Titandioxid, die möglicherweise mit Haftvermittlern, wie z.B. Silanen, Titanaten, oberflächenbehandelt wurden, gebildet ist.

17. Geschäumter Gegenstand gemäß einem der Ansprüche 1 bis 16, welcher organische Füllstoffe und Fasern, wie z.B. Holzpulver, Cellulose, Traubenrückstandspulver, Kleie, Maishülsen oder andere Naturfasern, in Konzentrationen zwischen 0,5 und 20% enthält.

18. Geschäumter Gegenstand gemäß einem der Ansprüche 1 bis 17, welcher Keimbildner, Schmiermittel und/oder Dispergiermittel und Weichmacher enthält.

19. Geschäumter Gegenstand gemäß einem der Ansprüche 1 bis 18, welcher Speiseöle, wie z.B. Palmöl, Maiskeimöl, Sojaöl, Sonnenblumenöl, C₁₂- bis C₂₂-Fettsäuren, deren Glyceride mit verschiedenen Substitutionsgraden und insbesondere gehärtete Fette tierischen oder synthetischen Ursprungs, die zumindest bei Umgebungstemperaturen und vorzugsweise oberhalb von Umgebungstemperaturen fest sind, enthält, um die Feuchtigkeitsbeständigkeit zu verbessern und die Benetzbarkeit durch Wasser zu verringern.

20. Geschäumter Gegenstand gemäß einem der Ansprüche 1 bis 19, welcher schwache Säuren, wie z.B. Milchsäure, Weinsäure, Zitronensäure, enthält, um die Viskosität der Stärke während des Extrusionsvorgangs zu regulieren.

21. Geschäumter Gegenstand gemäß einem der Ansprüche 1 bis 20, welcher mit Schichten von Faservlies, Fasergewebe, Papier, biologisch abbaubaren und nicht biologisch abbaubaren Folien oder Aluminium beschichtet ist.

22. Geschäumter Gegenstand gemäß Anspruch 21, hergestellt durch Beschichtung mit Faservlies oder Fasergewebe aus Naturfasern, wie z.B. Jute-, Baumwoll-, Wollfasern, Fasern auf Basis von Polysacchariden, wie z.B. Celluloseacetat, Stärkeacetat, Viskose, oder Fasern, die ausgehend von biologisch abbaubaren Polymeren und insbesondere aliphatischen Polyestern, wie z.B. Polymilchsäure, Polycaprolacton, Polyalkylencarboxylaten mit zweiwertigen Alkoholen und Säuren, ausgewählt entweder aus dem linearen und/oder cycloaliphatischen C₂-C₁₃-Bereich, aliphatisch-aromatischen Polyestern, insbesondere aus der Familie von Polyalkylenterephthalatadipaten und deren Copolymeren, Polyamiden, insbesondere auf Basis von Caprolactam, aliphatischem Amin, aliphatischen Polyurethanen, Polyesterurethanen, Polyharnstoff und Epoxidharzen, hergestellt werden.

23. Geschäumter Gegenstand gemäß Anspruch 21, welcher mit Folien gekoppelt ist, die aus biologisch abbaubaren Polymeren und insbesondere aliphatischen Polyestern, wie z.B. Polymilchsäure, Polycaprolacton und/oder cycloaliphatischen Stoffen, Polyalkylencarboxylaten mit zweiwertigen Alkoholen und Säuren entweder im linearen oder cycloaliphatischen C₂-C₁₃-Bereich, aliphatisch-aromatischen Polyestern, insbesondere aus der Familie von Polyalkylenterephthalatadipat und deren Copolymeren, Polyamiden, insbesondere auf Basis von Caprolactam, aliphatischen Aminen, aliphatischen Polyurethanen, Polyesterurethanen, Polyharnstoffen, durch Blasextrusion, Coextrusion und/oder Gießen erhaltenen Epoxidharzen, gebildet sind.

24. Geschäumter Gegenstand gemäß einem der Ansprüche 1 bis 20, einschließlich einer Beschichtung mit Emulsionen, Dispersionen, Lösungen, Schmelzmassen von biologisch abbaubaren Polymeren und insbesondere aliphatischen Polyestern, wie z.B. Polymilchsäure, Polycaprolacton, Polyalkylencarboxylaten mit zweiwertigen Alkoholen und Säuren, ausgewählt entweder aus dem linearen und/oder cycloaliphatischen C₂-C₁₃-Bereich, aliphatisch-aromatischen Polyestern, insbesondere aus der Familie von Polyalkylenterephthalatadipat und deren Copolymeren, Polyamiden, insbesondere auf Basis von Caprolactam, aliphatischen Aminen, aliphatischen Polyurethanen, Polyesterurethanen, Polyharnstoffen, Epoxidharzen.

25. Geschäumter Gegenstand gemäß Anspruch 23, wobei die Folien durch Temperatur und/oder Aufbringung von geeigneten biologisch abbaubaren Klebstoffen auf Basis von Polymeren von Milchsäure, Polyurethanen, Polyvinylacetaten und Polyvinylalkoholen, Proteinen, wie z.B. Casein und Gluten, Stärken, Dextrinen und anderen Polysacchariden, mit dem Gegenstand gekoppelt werden.

26. Geschäumter Gegenstand gemäß den Ansprüchen 23 und 25, wobei die Folien durch Gieß- und Blasfolienbildung erhalten und mit einer Klebefläche für den geschäumten Gegenstand coextrudiert werden können.

27. Geschäumter Gegenstand gemäß Anspruch 26, wobei die Folien einen Schmelzpunkt größer als 60°C, vorzugsweise größer als 80°C und noch bevorzugter größer als 100°C haben.

28. Geschäumter Gegenstand gemäß Anspruch 23 oder Anspruch 25, welcher aus einer formbaren Platte besteht.

29. Geschäumter Gegenstand gemäß einem der Ansprüche 1 bis 20, welcher mit natürlichen und synthetischen Wachsen mit Schmelzpunkten von bis zu 120°C abhängig von deren verschiedenen Anwendungen behandelt ist.

30. Verfahren zur Herstellung eines geschäumten Gegenstands gemäß einem der Ansprüche 1 bis 29 in Form einer geschäumten Platte mittels Extrusion, umfassend die folgenden Schritte:
- das Zuführen von Stärke mit einer inneren Viskosität im Bereich zwischen 2 und 0,6 dl/g in Gegenwart von Wasser in Anteilen von 6 bis 30 Gew.%, bezogen auf die Gesamtzusammensetzung, in solchen Mengen, um der stärkehaltigen Komponente zu ermöglichen, die kontinuierliche Phase des Materials zu bilden, und des thermoplastischen Polymers und gegebenenfalls weiterer Zusätze, wie z.B. Weichmacher, Schmiermittel, Keimbildner, Tenside, schwacher Säuren und Füllstoffe, zu einem Extruder;
- das vollständige Schmelzen der stärkehaltigen Masse;
- das Einbringen von CO₂ in Mengen im Bereich zwischen 0,4 und 10%, vorzugsweise zwischen 0,8 und 7% und noch bevorzugter zwischen 1,0 und 4 Gew.%, in die Schmelze bei einer Temperatur zwischen 100 und 180°C, vorzugsweise zwischen 120 und 160°C; und
- das Bearbeiten der Schmelze zwischen 5 und 40 Minuten, um die Verteilung der Mischung von Schaummitteln, Wasser und CO₂ und möglicherweise chemischen Schaummitteln, wie z.B. Zitronensäure und Bicarbonat, zu homogenisieren und die Viskosität der Zusammensetzung auf zwischen 1,5 und 0,3 dl/g einzustellen.

31. Verfahren gemäß Anspruch 30, wobei die Extrusion der Schmelze durch einen flachen oder röhrenförmigen Kopf erfolgt, welcher der Schmelze Schergeschwindigkeiten im Bereich zwischen 500 und 50.000 sec⁻¹, vorzugsweise zwischen 800 und 40.000 sec⁻¹ und noch bevorzugter zwischen 900 und 35.000 sec⁻¹, verleihen kann.

32. Verfahren gemäß Anspruch 31, wobei die Platte in Röhrenform extrudiert und mit Luft oder Dampf geblasen wird, um eine biaxialle Verstreckung zu vermitteln, glatte Oberflächen zu verleihen und die Platte bei einem gewünschten Feuchtigkeitspunkt zu halten, geöffnet, kalandriert, möglicherweise weiter konditioniert und um eine Spule gewickelt wird.

33. Verfahren gemäß Anspruch 31, wobei die Platte in Röhrenform extrudiert und mit Luft oder Dampf geblasen wird, um die Platte selbst auszudehnen und bei einem gewünschten Feuchtigkeitspunkt zu halten, geöffnet, kalandriert und zu flachen Platten geschnitten wird.

34. Verfahren gemäß Anspruch 31, wobei ein Teilfertigprodukt in Form eines Schlauchs hergestellt wird, der kalibriert, konditioniert und dann gesammelt wird.

35. Verfahren zum Formen eines geschäumten Gegenstands gemäß einem der Ansprüche 1 bis 29 zu einem geformten Gegenstand, welches Folgendes umfasst:
- das Konditionieren des geschäumten Gegenstands zu einem Wassergehalt zwischen 6% und 30%, vorzugsweise zwischen 10% und 25% und noch bevorzugter zwischen 15% und 20%, und bei einer Temperatur zwischen 40°C und 120°C und vorzugsweise zwischen 40°C und 100°C,
- das Formen in einer positiv-negativen Schlagform bei einer Temperatur zwischen Umgebungstemperatur und 80°C; und
- möglicherweise das Falten, um ein Produkt bereitzustellen, das mit einer Dichte zwischen 40 und 400 kg/m³, vorzugsweise zwischen 45 und 200 kg/m³ und noch bevorzugter zwischen 50 und 150 kg/m³, gebildet wurde und möglicherweise ein Drehgelenk hat, das gegenüber wiederholten Schließ/Öffnungszyklen resistent ist.

36. Geschäumter Gegenstand gemäß einem der Ansprüche 1 bis 29, welcher aus der Kombination von geschäumten Platten gemäß einem der Ansprüche 1 bis 32 in mehrschichtigen Strukturen resultiert, um Gegenstände von unterschiedlicher Geometrie, wie z.B. Rollen, Blöcke und Schaumplatten von erheblicher Elastizität, Eckstücke, Schutzbehälter zur Verwendung auf dem Sektor der elektrischen Haushaltsgeräte oder für elektronische Produkte, auf dem Lebensmittelsektor, für Pharmazeutika, für Design und Möbel, für Postversand oder Umschläge für Kuriere, zu bilden.

37. Geschäumter Gegenstand gemäß den Ansprüchen 1 bis 29, welcher aus der Kombination von geschäumten Platten gemäß den Ansprüchen 1 bis 28 mit anderen Trägem resultiert, um Mehrfachschichten bereitzustellen, die mit Holz, Papier, Karton, Faservlies, Fasergewebe aus natürlichen oder synthetischen Fasern, Aluminium oder anderen Metallen zur Verwendung auf dem Verpackungssektor gemischt sind.

38. Verwendung der gemäß Anspruch 35 gebildeten Gegenstände auf dem Lebensmittelverpackungssektor und insbesondere als Schalen für Nahrungsmittel mit einer Lebensdauer in der Größenordnung von 30 Tagen zum Verpacken von Fleisch, Molkereiprodukten, Gemüse, Eiern, Obst; Ausstellungsbehälter für Glas-, Plastik- oder Metallpackungen von geringen Abmessungen, Behälter für Schnellimbisse wie z.B. Behälter für Hamburger, Kartoffelchips und ähnliche Produkte; Mehrkammerbehälter für Schnellimbisse und Mahlzeiten.

39. Verwendung der gemäß Anspruch 35 gebildeten Gegenstände als Behälter für heiße und kalte Flüssigkeiten, als Becher für Kaffee und Getränke, Behälter für Suppe in der Art, die in asiatischen Ländern verwendet wird, und für andere Produkte mit hohem Flüssigkeitsgehalt für Schnellimbisse und Mahlzeiten.

40. Verwendung der gemäß Anspruch 35 gebildeten Gegenstände als Behälter für Objekte von geringem Gewicht, wie z.B. als Mehrkammerschalen für tragbare Telefone und kleine elektrische Haushaltsgeräte, die insbesondere solche mechanische Eigenschaften aufweisen, um Abriebphänomene zu verhindern, die bei Behältern aus Presspapier anzutreffen sind.

41. Verwendung der gemäß Anspruch 35 gebildeten Gegenstände als Schalen für das Einwickeln von Fleisch in Supermärkten, wobei die Schalen absorbierende oder superabsorbierende Materialien einschließen, um das Vorhandensein von Blut zu eliminieren, wobei das absorbierende Material direkt in das die Schale bildende Plattenmaterial eingebaut oder auf die Oberfläche oder in Zwischenschichten zwischen zwei zusammengeschweißten Halbschalen oder unter der Folie aufgebracht wird, welche die Schale undurchlässig macht.

42. Verwendung der gemäß Anspruch 35 gebildeten Gegenstände als Behälter für die Verwendung im Backofen und Mikrowellenherd, welcher möglicherweise oberflächenbehandelt ist, um eine übermäßige Schwächung des Behälters durch die Auswirkung des Entzugs von Wasser zu vermeiden.

## Revendications

1. Article expansé, en particulier sous forme d'une feuille expansée utile comme produit semi-fini adapté à une transformation ultérieure en un produit fini manufacturé, comprenant de l'amidon déstructuré ou complexé expansé en tant que phase continue et un polymère thermoplastique, ledit article ayant une densité située entre 20 et 150 kg/m³, des dimensions de cellules dans un domaine situé entre 25 et 700 µm avec une distribution des cellules telle que 80 % d'entre elles ont, sans étirement, une dimension située entre 25 et 400 µm, **caractérisé en ce que** le matériau à partir duquel est faite la mousse a une viscosité intrinsèque dans le DMSO à 30°C située entre 1,5 et 0,3 dl/g et **en ce que** ledit polymère thermoplastique comprend des polyesters dérivés d'acides difonctionnels et de diols aliphatiques ou des polyesters aliphatiques-aromatiques.

2. Article expansé selon la revendication 1, ayant une distribution des cellules telle que 80 % d'entre elles ont, sans étirement, une dimension située entre 25 et 300 µm.

3. Article expansé, en particulier sous forme d'une feuille expansée, selon la revendication 1, ayant une densité située entre 25 et 100 kg/m³ et des dimensions de cellules dans un domaine situé entre 40 et 600 µm.

4. Article expansé, en particulier sous forme d'une feuille expansée, selon la revendication 2, ayant une densité située entre 30 et 70 kg/m³ et une distribution de cellules telle que 80 % d'entre elles ont, sans étirement, une dimension située entre 30 et 200 µm.

5. Article expansé, en particulier sous forme d'une feuille expansée, selon la revendication 1, ayant une densité située entre 30 et 70 kg/m³ et des dimensions de cellules moyennes situées entre 80 et 120 µm.

6. Article expansé selon l'une quelconque des revendications 1 à 5, dans lequel l'amidon est un amidon naturel ou modifié ou un de leurs mélanges.

7. Article expansé selon la revendication 6, dans lequel l'amidon naturel ou modifié est dérivé de la pomme de terre, du blé, du maïs ou du tapioca.

8. Article expansé selon la revendication 6, dans lequel l'amidon modifié est modifié par voie physique ou chimique, et est choisi en particulier parmi des amidons éthoxylés, des amidons acétates, des amidons butyrates, des amidons propionates, des amidons hydroxypropylés, des amidons cationiques, des amidons oxydés, des amidons réticulés, des amidons gélatinés, des amidons complexés avec des molécules et/ou des polymères capables de donner des complexes de type "V", des amidons dextrinés et des amidons greffés avec des chaînes comme des polyesters, des polyuréthanes, des polyester-uréthanes, des polyurées, des polyester-urées, des polysiloxanes, des silanes, des titanates, des chaînes grasses.

9. Article expansé selon l'une quelconque des revendications 1 à 8, qui a été moulé en un article muni de charnières obtenues dans une phase de moulage, lesdites charnières étant capables de résister sans se casser à au moins 10 cycles consécutifs d'ouverture/fermeture, à une humidité relative de 35 % et à 23°C, utilisant 2-4 secondes pour chaque opération d'ouverture et de fermeture.

10. Article expansé selon l'une quelconque des revendications 1 à 9, dans lequel la viscosité intrinsèque dans du DMSO à 30°C se situe entre 1,2 et 0,4 dl/g.

11. Article expansé selon l'une quelconque des revendications 1 à 10, dans lequel la viscosité intrinsèque dans du DMSO à 30°C se situe entre 1,1 et 0,6 dl/g.

12. Article expansé selon l'une quelconque des revendications 1 à 11, contenant un ou plusieurs polymères thermoplastiques ayant un point de fusion situé entre 60 et 175°C.

13. Article expansé selon la revendication 12, dans lequel le polymère thermoplastique comprend des copolymères du type comprenant du téréphtalate-adipate d'alkylène traité ou non avec des agents d'allongement de chaîne, de préférence avec des quantités d'acide téréphtalique inférieures à 40 % en mol.

14. Article expansé selon la revendication 12, contenant du poly(alcool vinylique), des polymères d'acide azélaïque, d'acide sébacique, d'acide brassylique et leurs copolymères, des poly(sébaçate d'alkylène), des poly(azélate d'alkylène), des poly(brassylate d'alkylène), avec des diols compris entre C₂-C₁₃ et des polymères aromatiques-aliphatiques de type poly(téréphtalate-adipate d'alkylène).

15. Article expansé selon l'une quelconque des revendications 1 à 14, contenant des agents de nucléation pour la composition de départ à des concentrations situées dans le domaine de 0,05 à 10 % en masse, de préférence entre 0,5 et 7 % et plus préférentiellement entre 1 et 5 %.

16. Article moulé selon la revendication 15, dans lequel l'agent de nucléation est constitué de compositions inorganiques comme du talc (silicate de magnésium), du carbonate de calcium, des sulfates de sodium et de baryum, du dioxyde de titane, pouvant être traitées en surfaces avec des agents favorisant l'adhésion comme des silanes, des titanates.

17. Article expansé selon l'une quelconque des revendications 1 à 16, contenant des charges et des fibres organiques comme de la poudre de bois, de la cellulose, de la poudre de résidus de raisin, du son, des spathes de maïs ou d'autres fibres naturelles à des concentrations entre 0,5 et 20 %.

18. Article expansé selon l'une quelconque des revendications 1 à 17, contenant des agents de nucléation, des lubrifiants et/ou des dispersants et des plastifiants.

19. Article expansé selon l'une quelconque des revendications 1 à 18, contenant des huiles alimentaires comme l'huile de palme, l'huile de maïs, l'huile de soja, l'huile de tournesol, des acides gras en C₁₂-C₂₂, leurs glycérides à différents degrés de substitution, et en particulier des graisses hydrogénées d'origine animale ou synthétiques qui sont solides au moins à température ambiante, et de préférence au-dessus de la température ambiante, pour améliorer la résistance à l'humidité et réduire la mouillabilité par l'eau.

20. Article expansé selon l'une quelconque des revendications 1 à 19, contenant des acides faibles comme l'acide lactique, l'acide tartrique, l'acide citrique, pour réguler la viscosité de l'amidon pendant le processus d'extrusion.

21. Article expansé selon l'une quelconque des revendications 1 à 20, qui est stratifié avec des couches de non-tissé, de tissu, de papier, de films biodégradables ou non biodégradables ou d'aluminium.

22. Article expansé selon la revendication 21, produit par stratification avec du non-tissé ou du tissu de fibres naturelles, comme des fibres de jute, de coton, de laine, de fibres à base de polysaccharides, comme l'acétate de cellulose, l'acétate d'amidon, la viscose, ou de fibres produites à partir de polymères biodégradables et en particulier de polyesters aliphatiques comme un poly(acide lactique), une polycaprolactone, des poly(carboxylate d'alkylène) avec des dialcools et des diacides choisis dans le domaine de C₂-C₁₃, linéaires et/ou cycloaliphatiques, des polyesters aliphatiques-aromatiques, en particulier de la famille des poly(téréphtalate-adipate d'alkylène) et leurs copolymères, des polyamides, en particulier à base de caprolactame, d'amines aliphatiques, des polyuréthanes aliphatiques, des polyester-uréthanes, des polyurées et des résines époxy.

23. Article expansé selon la revendication 21 couplé avec des films constitués de polymères biodégradables et en particulier de polyesters aliphatiques comme un poly(acide lactique), une polycaprolactone et/ou cycloaliphatiques, des poly(carboxylate d'alkylène) avec des dialcools et des diacides dans le domaine de C₂-C₁₃, linéaires ou cycloaliphatiques, des polyesters aliphatiques-aromatiques, en particulier de la famille des poly(téréphtalate-adipate d'alkylène) et leurs copolymères, des polyamides, en particulier à base de caprolactame, d'amines aliphatiques, des polyuréthanes aliphatiques, des polyester-uréthanes, des polyurées, des résines époxy obtenus par extrusion-soufflage, co-extrusion et/ou coulée.

24. Article expansé selon l'une quelconque des revendications 1 à 20, comprenant un revêtement avec des émulsions, des dispersions, des solutions, des masses fondues de polymères biodégradables et en particulier de polyesters aliphatiques comme un poly(acide lactique), une polycaprolactone, des poly(carboxylate d'alkylène) avec des dialcools et des diacides choisis dans le domaine de C₂-C₁₃, linéaires et/ou cycloaliphatiques, des polyesters aliphatiques-aromatiques, en particulier de la famille des poly(téréphtalate-adipate d'alkylène) et leurs copolymères, des polyamides, en particulier à base de caprolactame, d'amines aliphatiques, des polyuréthanes aliphatiques, des polyester-uréthanes, des polyurées, des résines époxy.

25. Article expansé selon la revendication 23, dans lequel les films sont couplés à l'article par chauffage et/ou application d'adhésifs biodégradables appropriés à base de polymères d'acide lactique, de polyuréthanes, de poly(lactate de vinyle) et de poly(alcool vinylique), de protéines comme la caséine ou le gluten, d'amidons, de dextrines et d'autres polysaccharides.

26. Article expansé selon les revendications 23 et 25, dans lequel les films peuvent être obtenus par coulée et formation de films à bulles et peuvent être co-extrudés avec une surface adhésive pour l'article expansé.

27. Article expansé selon la revendication 26, dans lequel les films ont un point de fusion supérieur à 60°C, de préférence supérieur à 80°C et plus préférentiellement supérieur à 100°C.

28. Article expansé selon la revendication 23 ou la revendication 25, constitué d'une feuille formable.

29. Article expansé selon l'une quelconque des revendications 1 à 20, traité avec des cires naturelles ou synthétiques ayant des points de fusion allant jusqu'à 120°C en fonction de leurs diverses applications.

30. Procédé de production par extrusion d'un article expansé selon l'une quelconque des revendications 1 à 20, sous forme d'une feuille expansée, comprenant les étapes de:
- alimentation d'une extrudeuse avec de l'amidon ayant une viscosité intrinsèque située entre 2 et 0,6 dl/g en présence d'eau dans des proportions de 6 à 30 % en masse de la composition totale, en des quantités permettant au constituant amylacé de constituer la phase continue du matériau, et avec ledit polymère thermoplastique et éventuellement d'autres additifs comme des plastifiants, des lubrifiants, des agents de nucléation, des agents tensioactifs, des acides faibles et des charges;
- fusion totale de la masse amylacée;
- introduction de CO₂ en des quantités situées entre 0,4 et 10 %, de préférence entre 0,8 et 7 % et plus préférentiellement entre 1,0 et 4 % en masse dans la masse fondue à une température située entre 100 et 180°C, de préférence entre 120 et 160°C; et
- travail de la masse fondue durant entre 5 et 40 minutes pour homogénéiser la distribution du mélange des agents d'expansion, de l'eau et du CO₂, et éventuellement d'agents d'expansion chimiques comme l'acide citrique et un bicarbonate, et pour ajuster la viscosité de la composition entre 1,5 et 0,3 dl/g.

31. Procédé selon la revendication 30, dans lequel l'extrusion de la masse fondue a lieu à travers une tête plate ou tubulaire capable de donner à la masse fondue des vitesses de cisaillement comprises entre 500 et 50 000 s⁻¹, de préférence entre 800 et 40 000 s⁻¹ et plus préférentiellement entre 900 et 35 000 s⁻¹.

32. Procédé selon la revendication 31, dans lequel on extrude la feuille sous forme tubulaire et on la gonfle avec de l'air ou de la vapeur d'eau pour donner un étirement biaxial, conférer des surfaces lisses et maintenir la feuille au niveau d'humidité désiré, on l'ouvre, on la calandre, on la conditionne encore éventuellement et on l'enroule sur une bobine.

33. Procédé selon la revendication 31, dans lequel on extrude la feuille sous une forme tubulaire et on la gonfle avec de l'air ou de la vapeur d'eau pour étirer la feuille elle-même et la maintenir au niveau d'humidité désiré, on l'ouvre, on la calandre et on la découpe en feuilles plates.

34. Procédé selon la revendication 31, dans lequel on produit un produit semi-fini sous forme d'un tube que l'on calibre, conditionne, puis recueille.

35. Procédé de moulage d'un article expansé selon l'une quelconque des revendications 1 à 29 en un article moulé, qui comprend:
- le conditionnement dudit article moulé à une teneur en eau entre 6 et 30 %, de préférence entre 10 et 25 % et plus préférentiellement entre 15 et 20 % et à une température entre 40 et 120°C et de préférence entre 40 et 100°C,
- le moulage dans un moule pour presse à estamper mâle-femelle entre la température ambiante et 80°C; et
- éventuellement le pliage, pour fournir un produit moulé ayant une densité entre 40 et 400 kg/m³, de préférence entre 45 et 200 kg/m³ et plus préférentiellement entre 50 et 150 kg/m³, ayant éventuellement une charnière résistant à des cycles répétés de fermeture/ouverture.

36. Article expansé selon l'une quelconque des revendications 1 à 29, résultant de la combinaison de feuilles expansées selon l'une quelconque des revendications 1 à 32 en des structures multicouches, pour former des articles de géométrie variée comme des rouleaux, des blocs et des feuilles expansées de grande résilience, des pièces en coin, des récipients protecteurs pour une utilisation dans le secteur des appareils électroménagers, ou pour des produits électroniques, dans le secteur alimentaire, pour des produits pharmaceutiques, pour le design et l'ameublement, pour la vente par correspondance ou des enveloppes pour des courriers.

37. Article expansé selon les revendications 1 à 29, résultant de la combinaison de feuilles expansées selon les revendications 1 à 28 avec d'autres supports pour l'obtention de multicouches mélangées avec du bois, du papier, du carton, du non-tissé, du tissu de fibres naturelles ou synthétiques, de l'aluminium ou d'autres métaux pour une utilisation dans le secteur de l'emballage.

38. Utilisation des articles moulés selon la revendication 35 dans le secteur de l'emballage alimentaire et en particulier comme plateaux pour des aliments ayant une durée de vie de l'ordre de 30 jours destinés à l'emballage de viande, de produits laitiers, de légumes, d'oeufs, de fruits; récipients de présentation pour des emballages de verre, plastique ou métal de petites dimensions, récipients pour la restauration rapide comme des récipients pour hamburgers, frites et produits similaires; récipients à plusieurs compartiments pour la restauration rapide et pour des repas.

39. Utilisation d'articles moulés selon la revendication 35 comme récipients pour des liquides chauds et froids comme des tasses pour le café et des boissons, des récipients pour des soupes du type utilisé dans les pays asiatiques et pour d'autres produits ayant une haute teneur en liquide pour la restauration rapide et des repas.

40. Utilisation d'articles moulés selon la revendication 35 comme récipients pour des objets légers comme des plateaux à plusieurs compartiments pour des téléphones portables et de petits appareils électroménagers, en particulier ayant des propriétés mécaniques permettant d'éviter des phénomènes d'abrasion rencontrés avec des récipients en papier embouti.

41. Utilisation d'articles moulés selon la revendication 35 comme plateaux pour emballer de la viande dans les supermarchés, lesdits plateaux comprenant des matériaux absorbants ou superabsorbants pour l'élimination de la présence de sang, ledit matériau absorbant étant inséré directement dans le matériau de la feuille formant le plateau, ou appliqué sur la surface ou dans des couches intermédiaires entre deux coquilles moulées entre elles ou sous le film qui rend le plateau imperméable.

42. Utilisation d'articles moulés selon la revendication 35 comme récipients à utiliser au four ou au four à micro-ondes, pouvant être traités en surface pour éviter un affaiblissement excessif du récipient sous l'effet de l'élimination de l'eau.
